(19) Europäisches Patentamt
European Patent Office
Office européen des brevets

(11) EP 1 640 998 A1

(12) **EUROPEAN PATENT APPLICATION**
published in accordance with Art. 158(3) EPC

(43) Date of publication:
**29.03.2006 Bulletin 2006/13**

(21) Application number: **04746608.1**

(22) Date of filing: **29.06.2004**

(51) Int Cl.:
***H01B 3/00*** *(1968.09)* ***H01B 3/30*** *(1968.09)*
***H01B 17/64*** *(1968.09)* ***H01G 4/18*** *(1974.07)*
***H01G 4/20*** *(1974.07)* ***H01G 13/00*** *(1968.09)*

(86) International application number:
**PCT/JP2004/009139**

(87) International publication number:
**WO 2005/001851 (06.01.2005 Gazette 2005/01)**

(84) Designated Contracting States:
**DE FR**

(30) Priority: **30.06.2003 JP 2003186228**
**20.04.2004 JP 2004123649**

(71) Applicant: **FUJI ELECTRIC HOLDINGS CO., LTD.**
**Kawasaki-shi,**
**Kanagawa 210-0856 (JP)**

(72) Inventors:
- **Kato, H.,**
**Fuji Elrctric Adv. Technology Co., Ltd.**
**Kanagawa 2400194 (JP)**
- **Kawakami, H.,**
**Fuji Electric Adv. Techn. Co, Ltd.**
**Kanagawa 2400194 (JP)**
- **Yamashiro, K.,**
**Fuji Electric Adv. Techn. Co., Ltd.**
**Kanagawa 2400194 (JP)**

(74) Representative: **Hoffmann, Eckart**
**Bahnhofstrasse 103**
**82166 Gräfelfing (DE)**

(54) **CAPACITOR**

(57) [Problem] To provide a flexible capacitor that can be easily produced at low temperature.

[Means for Resolution] There is provided a capacitor having a dielectric material layer and two electrodes sandwiching the layer, **characterized in that** the dielectric material layer contains metal microparticles and/or an organic charge trapping material in an organic insulating material, and the metal microparticles, etc. has an ionization potential and an electron affinity at an energy level between the ionization potential and the electron affinity of the organic insulating material. Once the metal microparticles, etc. is charged by applying voltage, the charge is trapped in the metal microparticles, etc. due to the energy level relation to the organic insulating material. The trapped charge acts in the same manner as dielectric polarization in the dielectric material, so that extremely large dielectric constant can be obtained practically even when the organic insulating material has a small dielectric constant.

FIG. 1

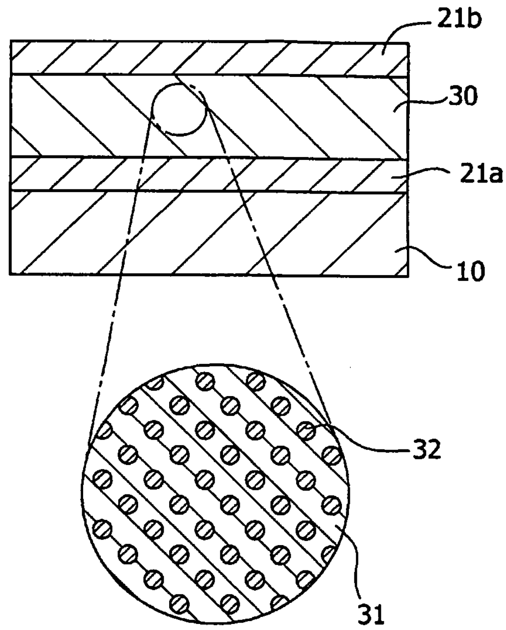


EP 1 640 998 A1

**Description**

Technical Field

The present invention relates to a dielectric material and a capacitor, particularly a capacitor for use as an electronic circuit incorporated in printed boards or integrated circuits.

Background Art

Recently, size, thickness, and weight of electric apparatuses have been reduced, electric circuits have been densified and digitalized, and therewith there have been an increasing demand of improving size, performance, and reliability of electronic components. Under such circumstances, also capacitors are required to have small size and high capacity.

However, surface mounted components such as the capacitors still occupy a large area of the printed circuit boards. This is a major obstacle in further miniaturizing the electronic apparatuses. To overcome the problem, there have been attempts to incorporate the electronic parts such as capacitors in circuit boards (e.g. Patent Documents 1 and 2).

As frequency is increased and voltage is lowered in integrated circuits, malfunction caused by change of power supply voltage due to noise is becoming a serious problem. The problem is caused because the allowable range of the power supply voltage is reduced with lowering the voltage. To prevent malfunction due to high-frequency noise, generally capacitors are placed around power supplies. The capacitors for the use are called bypass capacitors or decoupling capacitors, and act to remove the high-frequency noise and to prevent instantaneous reduction of the power supply voltage by supplying energy instantaneously from the capacitor. Electrostatic capacity of the capacitor is important for the energy supply.

Though an ideal capacitor has only electrostatic capacity components without resistance components and inductance components, practical capacitors have series resistance components and series inductance components. Impedance of the capacity components is reduced and the inductance components are increased as the frequency is increased. Therefore, with future increase of operating frequency, the inductance components of devices and the inductance components of wirings are expected to cause noise. Thus, it is required that the capacitor has inductance components that are small as much as possible and a higher self-resonant frequency to certainly act over high frequency area. Further, to reduce the inductance components due to the wiring distance as much as possible, the nearer to CPU the decoupling capacitor is, the better.

On the other hand, with the above-described lowering of the power supply voltage, the rated working voltage of the capacitor will be able to be smaller in future.

To respond to the above problems of high frequency and low voltage of the integrated circuits, proposed are methods of embedding a high-performance capacitor in a printed circuit board to minimize the wiring distance between a CPU and the capacitor (e.g., Patent Documents 3 to 5), and methods of forming a capacitor into a thin film and incorporating the film in a power supply IC to form 1 chip device.

Further, in small-sized portable devices typified by mobile phones, printed circuit boards mainly comprise resin substrates, so that a capacitor having a little flexibility like the resin substrates and excellent high frequency properties has been strongly demanded.

On the other hand, in most of the disclosed proposals, dielectric materials are such that a ceramics-based material requiring high-temperature burning is embedded in a ceramic substrate (e.g., Patent Documents 6 and 7).

Patent Document 1: JP-A-10-56251
Patent Document 2: JP-A-11-68321
Patent Document 3: JP-A-4-211191
Patent Document 4: JP-A-10-335178
Patent Document 5: JP-A-11-111561
Patent Document 6: JP-A-8-222656
Patent Document 7: JP-A-8-181453

Disclosure of the Invention

Problems that the Invention is to Solve

The dielectric materials, which comprise the ceramics-based material requiring high-temperature burning, embedded in the ceramic substrate, have problems. The ceramics-based material is likely to be broken, peeled, or contaminated in an industrial production process, and thereby is easily deteriorated. In particular, the material is often cracked in the electrode forming process including paste application and mounting, to cause defect of device properties.

Further, in the case of incorporating a capacitor in a resin substrate, a ceramics paste, which is converted to a dielectric material by burning, and the resin substrate cannot be burned together at a high temperature after forming the ceramics paste on the substrate. Thus, a complicated procedure of embedding an independent ceramic capacitor in the resin substrate afterward is required.

An object of the present invention is to solve the above conventional problems, thereby providing a flexible capacitor that can be easily produced at low temperature.

Means for Solving the Problems

To achieve the object, the capacitor of the present invention comprises a layer of a dielectric material and two electrodes sandwiching the layer, and is characterized in that the dielectric material layer contains metal microparticles and/or an organic charge trapping material (which may be referred to as metal microparticles, etc. hereinafter) in an organic insulating material, and the metal microparticles, etc. have an ionization potential and an electron affinity at an energy level between the ionization potential and the electron affinity of the organic insulating material.

In the capacitor of the invention, once the metal microparticles, etc. are charged by applying voltage, the charge is trapped in the metal microparticles, etc. due to the energy level relation to the organic insulating material. The trapped charge acts in the same manner as dielectric polarization in the dielectric material, so that extremely large dielectric constant can be obtained practically even when the organic insulating material has a small dielectric constant.

The capacitor can be produced at room temperature by a simple method such as a vacuum deposition method and a spin coating method, and has flexibility, characteristic of organic materials.

In the invention, it is preferred that the organic insulating material is selected from 2-amino-4,5-imidazole dicyanate, quinomethane compounds, triphenylamine compounds, and pyridone compounds, and the metal microparticles are selected from aluminum, gold, and copper particles.

In the invention, it is preferred that the organic insulating material is 2-amino-4,5-imidazole dicyanate, triphenylamine compounds, or $\alpha$-NPD, and the organic charge trapping material is at least one selected from the group consisting of pyridone compounds, phthalocyanine compounds, and $\alpha$-6T.

Thus, according to the invention, there are provided the dielectric material and the capacitor comprising the layer of the dielectric material and two electrodes sandwiching the layer, and the dielectric material comprises the organic insulating material, and the metal microparticles and/or the organic charge trapping material in the organic insulating material, the metal microparticles having a work function at an energy level between the ionization potential and the electron affinity of the organic insulating material, or alternatively the metal microparticles or the organic charge trapping material having an ionization potential and an electron affinity at an energy level between the ionization potential and the electron affinity of the organic insulating material.

According to the invention, there is further provided a method for producing a capacitor comprising the steps of forming an electrode thin film, applying a liquid mixture containing an organic insulating material, and metal microparticles and/or an organic charge trapping material to the formed electrode thin film, followed by drying, and forming an electrode thin film on the dried coated film.

Furthermore, in the invention, there is provided a method for producing a capacitor, comprising the steps of forming an electrode thin film, codepositing an organic insulating material, and metal microparticles and/or an organic charge trapping material on the formed electrode thin film, and forming an electrode thin film on the codeposited film.

Advantage of the Invention

As described in detail below, according to the present invention, there is provided a capacitor capable of showing high relative dielectric constant and large capacity even in the case of using an organic insulating material with a low relative dielectric constant. Further, the capacitor is flexible and can be produced at low temperature near room temperature, and thereby can be suitably used in various places such as printed boards and integrated circuits.

Brief Description of the Drawings

Fig. 1 is a schematic cross-sectional view showing one embodiment of the capacitor of the present invention.

Fig. 2 is a scanning electron microscope (SEM) photograph showing the surface of the dielectric material layer of Example 1.

Best Mode for Carrying Out the Invention

The present invention will be described in detail below with reference to the drawings.

Fig. 1 is a schematic cross-sectional view showing one embodiment of the capacitor of the invention.

As shown in Fig. 1, this capacitor has such a structure that an electrode layer 21a, a dielectric material layer 30 of the organic insulating material, which contains the metal microparticles, etc., and an electrode layer 21 b are stacked in this order on a substrate 10.

The substrate 10 is preferably a glass substrate or a film substrate of polyimide, etc. though not particularly restrictive.

The materials for the electrode layers 21 a, 21 b are not particularly limited and may be appropriately selected from metal materials such as aluminum, gold, silver, nickel, and iron, inorganic materials such as ITO and carbon, organic conjugated materials, organic materials such as liquid crystals, semiconductor materials such as silicon, etc.

In the capacitor of the invention, the dielectric material layer 30 is constituted by an ultrathin organic film. The producing processes thereof are carried out at a low temperature of 100°C or lower, and the materials are flexible, so that the problems of breaking, peeling, contamination, etc. are hardly caused unlike conventional ceramic materials.

The dielectric material layer 30 contains the metal microparticles, etc. in the organic insulating material, and is characterized in that the work function of the metal microparticles, or the ionization potential and the electron affinity of the metal microparticles, etc. is at an energy level between the ionization potential and the electron affinity of the organic insulating material.

The work function is the amount of minimum work required to extract an electron from a solid into vacuum.

The ionization potential is an energy required to remove one electron from a neutral atom, an ion, or a molecule, and an energy for removing one outermost electron in vacuum is defined as a first ionization potential, an energy required to remove another electron from the resultant monovalent positive ion is defined as a second ionization potential, and an energy for removing the third or fourth electron is defined as a third or fourth ionization potential. Thus, a smaller ionization potential means that it is converted to a positive ion more easily. In the invention, the first ionization potential is an object for consideration.

The electron affinity is an energy released when one electron is added to an atom, a molecule, or a negative ion.

The ionization potential of the dielectric material layer may be measured easily by photoemission spectroscopy (e.g. AC-2 manufactured by Riken Keiki Co., Ltd.) in atmosphere, etc. The electron affinity is generally obtained by measuring an optical band gap from optical absorption spectra, and by adding it to the ionization potential.

The ionization potential and the electron affinity of a single atom of each metal material are obtained as a measured value or a calculated value as shown in Table 1. When a metal material has a sufficiently large size (in the bulk state), these values are observed as the work function, which can be easily measured by the above photoemission spectroscopy in atmosphere, etc., and those of various materials have been obtained. On the contrary, it is known that when the metal material is a fine particle having nm size as in the invention, the values depend on the particle size. Thus, the ionization potential and the electron affinity of the material in the state of fine particle are intermediate values between the ionization potential and the electron affinity of the single atom and the work function of the bulk state. It is known that these values are fundamentally well associated with the fine particle size while the values are slightly affected by polarization in the material of the dielectric layer, and data of various metal materials have been obtained. For example, references include *Clusters of Atoms and Molecules,* edited by Hellmut Haberland, Spring-Verlag, Berlin, 1994.

Thus, in the most simple model, the relations of the ionization potential IP and the electron affinity EA to the work function WF and the fine particle diameter R (nm) are represented by the following equations:

$$IP = WF + A / R \tag{I}$$

$$EA = WF - B / R \tag{II}$$

wherein $A = 3e^2/8$, $B = 5e^2/8$, and e is an electron charge.

Therefore, the ionization potential and electron affinity can be approximately estimated by observing the fine particle size.

The organic insulating material is not particularly restricted, and may be selected from 2-amino-4,5-imidazole dicyanate, quinomethane compounds, triphenylamine compounds, pyridone compounds, polystyrenes, polyvinyl carbazoles, α-NPD (N,N'-di(naphthalene-1-yl)-N,N'-diphenylbenzidine), TPD (N,N'-bis(3-methylphenyl)-N,N'-diphenylbenzidine), Alq3 (tris-(8-hydroxyquinolinato) aluminum), CBP (4,4'-bis(carbazole-9-yl)-biphenyl), etc.

The average particle diameter of the metal microparticles is not particularly restricted, and is preferably 2 to 100 nm in the deposition method and 1 to 50 nm in the application method from the viewpoint of producing and dispersing the metal microparticles used.

The organic charge trapping material is required to have an ionization potential smaller than that of the organic insulating material and an electron affinity larger than that of the organic insulating material, and thereby naturally has an energy gap smaller than that of the organic insulating material. The energy gap of the organic charge trapping material is preferably 2 eV or less while it depends on the organic insulating material to be combined therewith.

More specifically, the organic charge trapping material is preferably selected from pyridone compounds, phthalocyanine compounds, thiophene compounds typified by α-6T (α-sexithiophene), acene compounds typified by pentacene, etc.

Among the above materials, in the embodiment of using the metal microparticles, it is particularly preferred that the organic insulating material is 2-amino-4,5-imidazole dicyanate, quinomethane compounds, triphenylamine compounds, or pyridone compounds, and the metal microparticles is at least one material selected from the group consisting of aluminum, gold, and copper.

Among the above materials, in the embodiment of using the organic charge trapping material, it is particularly preferred that the organic insulating material is 2-amino-4,5-imidazole dicyanate, triphenylamine compounds, or α-NPD, and the organic charge trapping material is at least one material selected from the group consisting of pyridone compounds, phthalocyanine compounds, and α-6T.

The structural formula of 2-amino-4,5-imidazole dicyanate is shown below.

[Chemical Formula 1]

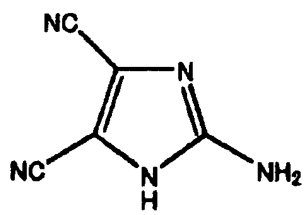

The quinomethane compounds include ones compounds by the following formulae though not particularly restrictive.

[Chemical Formula 2]

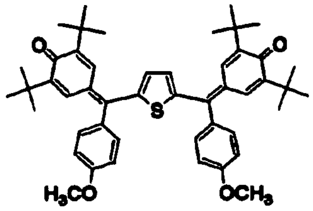

(I·1)

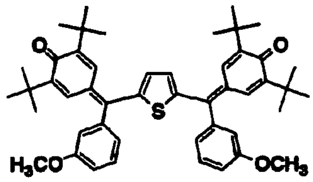

(I·2)

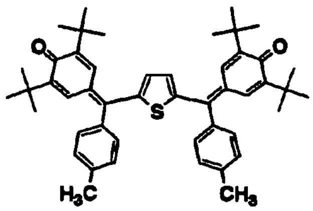

(I·3)

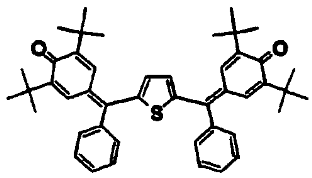

(I·4)

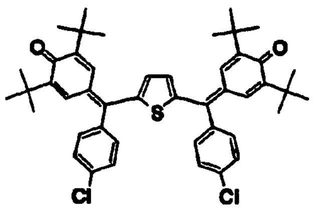

(I·5)

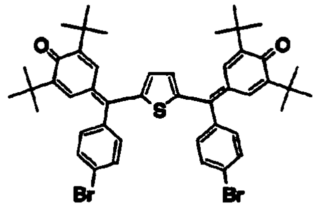

(I·6)

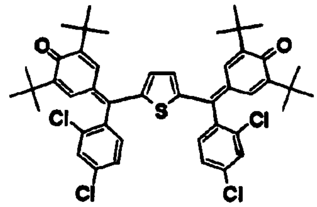

(I·7)

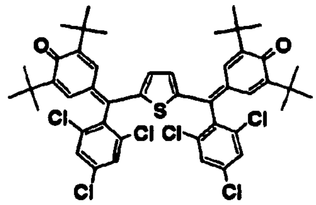

(I·8)

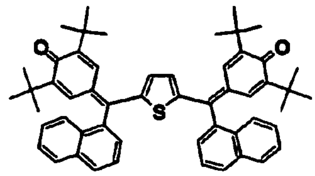

(I·9)

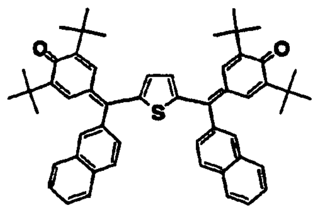

(I·10)

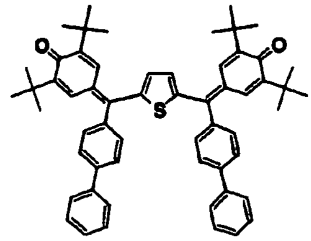
(I·11)

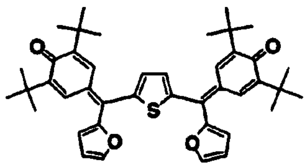
(I·12)

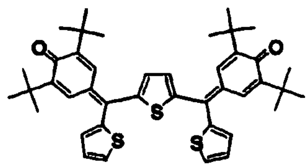
(I·13)

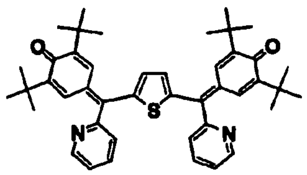
(I·14)

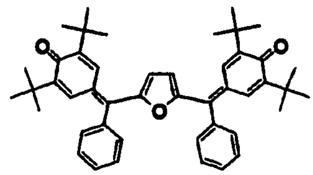
(I·15)

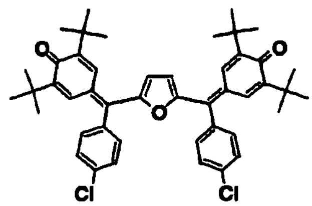
(I·16)

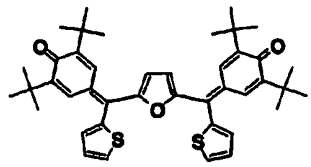
(I·17)

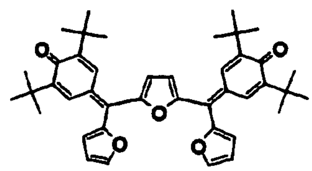
(I·18)

Further, the triphenylamine compounds include compounds represented by the following formulae.

[Chemical Formula 3]

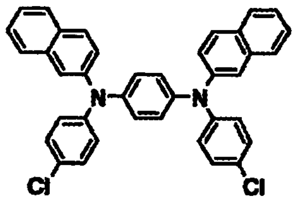

(I-1)

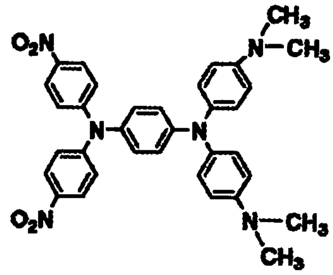

(I-2)

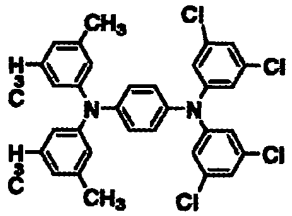

(I-3)

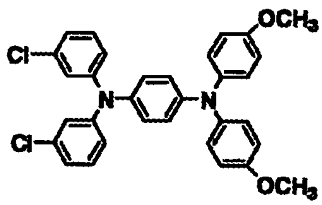

(I-4)

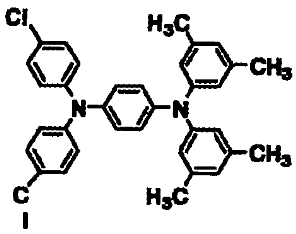

(I-5)

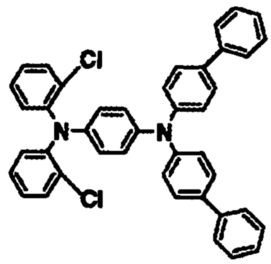

(I-6)

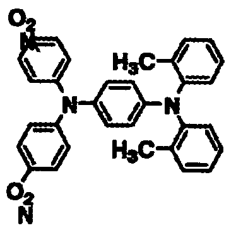

(I-7)

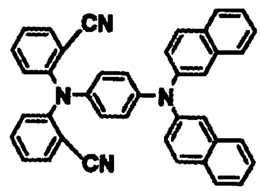

(I-8)

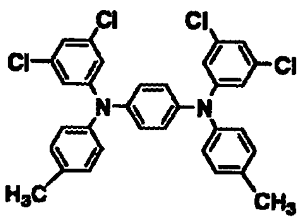

(I-9)

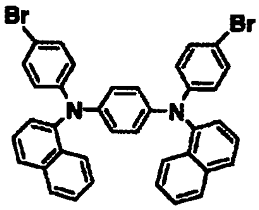

(I-10)

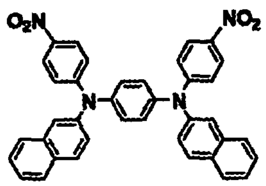

(I-11)

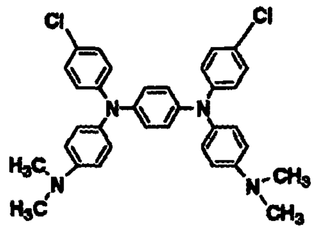

(I-12)

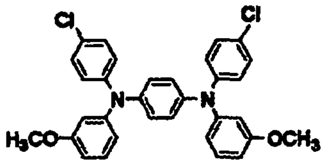

(I-13)

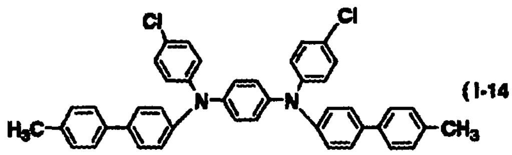

(I-14)

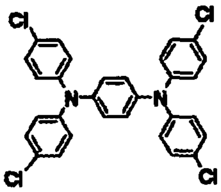

(I-15)

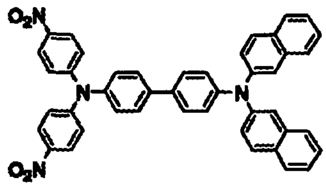

(I-16)

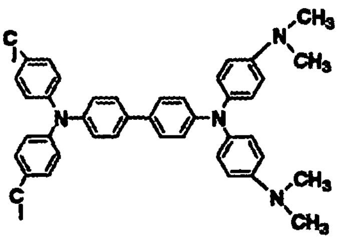

(I-17)

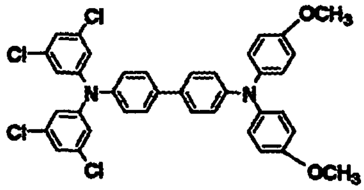

(I-18)

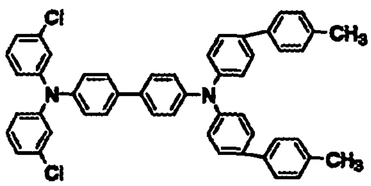

(I-19)

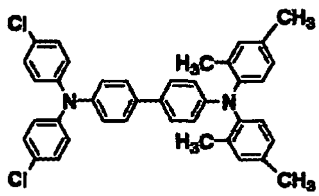

(I-20)

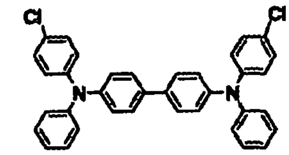

(I-21)

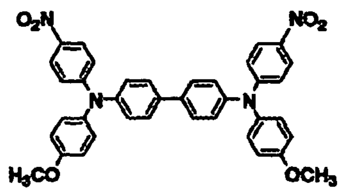

(I-22)

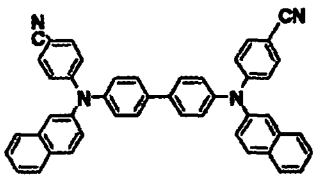

(I-23)

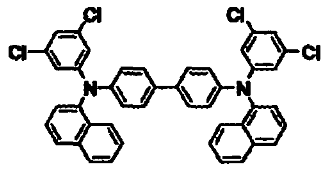

(I-24)

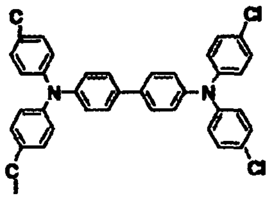

(I-25)

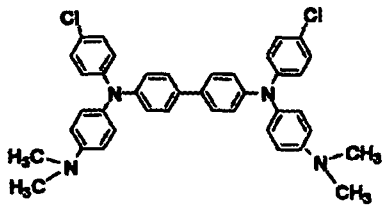

(I-26)

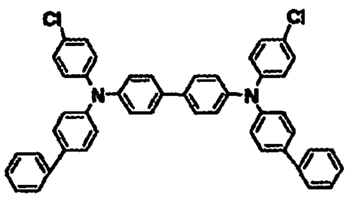

(I-27)

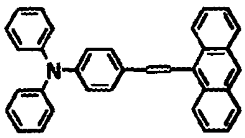
(I-28)

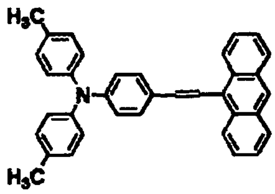
(I-29)

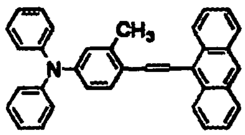
(I-30)

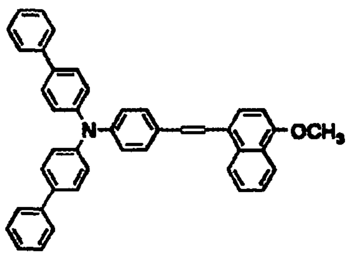
(I-31)

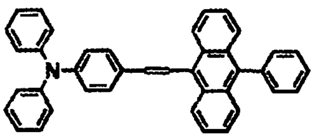
(I-32)

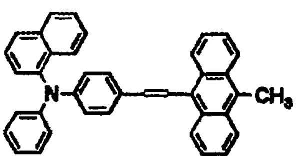
(I-33)

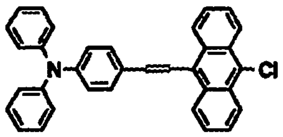
(I-34)

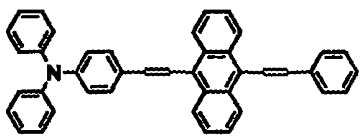
(I-35)

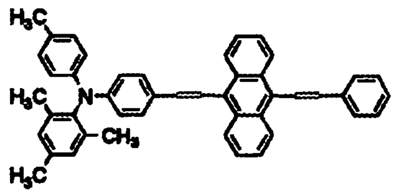
(I-36)

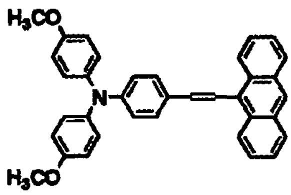
(I-37)

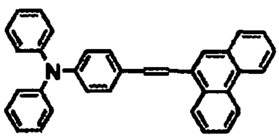
(I-38)

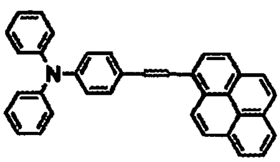
(I-39)

The pyridone compounds include compounds represented by the following formulae.

[Chemical Formula 4]

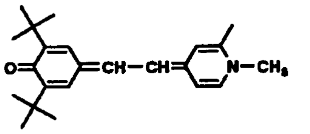
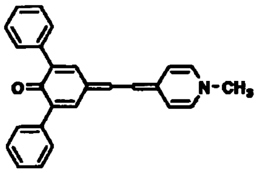
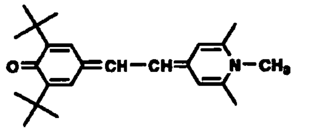
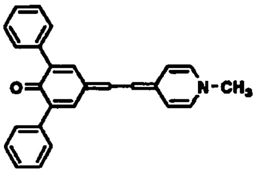
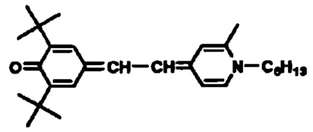
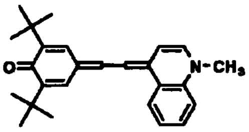
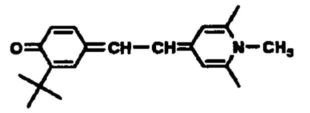
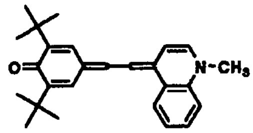
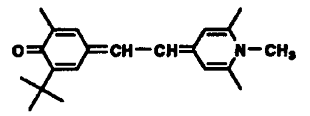
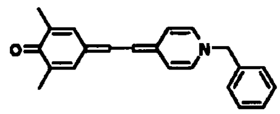
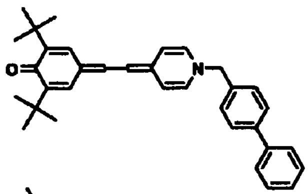
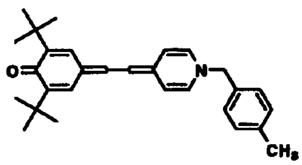
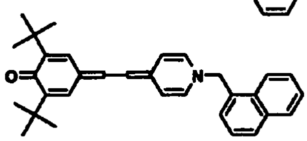
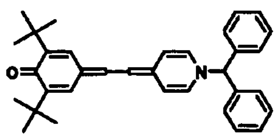
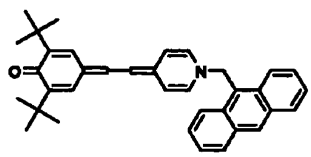
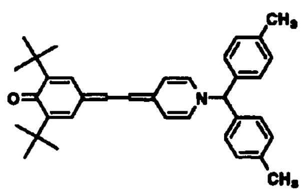
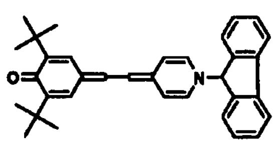

The phthalocyanine compounds include copper phthalocyanine, lead phthalocyanine, zinc phthalocyanine, aluminum phthalocyanine, iron phthalocyanine, cobalt phthalocyanine, tin phthalocyanine, titanyl phthalocyanine, and metal-free phthalocyanine.

Table 1 shows the work functions, ionization potentials, electron affinities of examples of the metal microparticles, etc. and the organic insulating material.

As shown in Table 1, each of aluminum, gold, and copper has a work function at an energy level between the ionization potential and the electron affinity of 2-amino-4,5-imidazole dicyanate, whereby the dielectric constant can be effectively improved by accumulating charges in the metal microparticles. Further, by using the metal microparticles, which have such a particle diameter that IP and EP calculated from the equations (I) and (II) with the work function WF shown in Table 1 are between the ionization potential and electron affinity of the organic insulating material, the dielectric constant can be effectively improved by accumulating charges in the metal microparticles. Furthermore, as shown in Table 1, each of the pyridone compounds, the phthalocyanine compounds, and α-6T has an ionization potential and an electron affinity at energy levels between those of 2-amino-4,5-imidazole dicyanate, whereby the dielectric constant can be effectively improved by accumulating charges in the organic charge trapping material.

[Table 1]

| | | Ionization potential (eV) | Electron affinity (eV) | Work function (eV) |
|---|---|---|---|---|
| Organic insulating material | 2-Amino-4,5-imidazole dicyanate | 5.60 *1 | 1.82 *1 | |
| | Quinomethane compound A (see Example 5) | 6.03 *1 | 4.08 *1 | |
| | Quinomethane compound B (see Example 6) | 6.01 *1 | 4.06 *1 | |
| | Triphenylamine compound C (see Example 7) | 5.41 *1 | 2.97 *1 | |
| | Triphenylamine compound D (see Example 8) | 5.22 *1 | 2.81 *1 | |
| | Pyridone compound E (see Example 9) | 4.93 *1 | 3.06 *1 | |
| | Triphenylamine compound G (see Example 15) | 5.5 *1 | 2.6 *1 | |
| | α-NPD | 5.5 | 2.4 | |
| | TPD | 5.5 | 2.4 | |
| | Alq3 | 5.8 | 3.1 | |
| | CBP | 6.0 | 2.9 | |
| Metal microparticles | Aluminum | 5.986 *2 | 0.441 *3 | 4.24 *4 |
| | Gold | 9.225 *2 | 0.441 *3 | 5.1 *4 |
| | Copper | 7.726 *2 | 1.228 *3 | 4.65 *4 |
| | Potassium | 4.341 *2 | 0.501 *3 | 2.8 *4 |
| | Sodium | 5.139 *2 | 0.548 *3 | 2.36 *4 |
| | Calcium | 6.113 *2 | <0 *3 | 2.9 *4 |
| | Magnesium | 7.646 *2 | <0 *3 | 3.66 *4 |
| | Indium | 5.786 *2 | 0.3 *3 | 4.09 *4 |
| | Platinum | 8.61 *2 | 2.128 *3 | 5.64 *4 |
| | Silver | 7.576 *2 | 1.302 *3 | 4.26 *4 |

Table continued

| | | Ionization potential (eV) | Electron affinity (eV) | Work function (eV) |
|---|---|---|---|---|
| Organic charge trapping material | Pyridone compound E (see Example 12) | 4.93 *1 | 3.06 *1 | |
| | α-6T | 5.1 | 3.5 | |
| | Zinc phthalocyanine | 5.1 | 3.5 | |
| | Copper phthalocyanine | 5.1 | 3.5 | |

*1 Values measured in the invention
*2 *Kagaku Binran, Kisohen II,* 1993, page 618 to 619
*3 *Kagaku Binran, Kisohen II,* 1993, page 629
*4 *Kagaku Binran, Kisohen II,* 1993, page 489

The compounding volume ratio of the metal microparticles and the organic insulating material is preferably 1:1 to 8:1. When the amount of the metal microparticles is less than 1:1, the dielectric constant is too small and the desired properties are not obtained in some cases. When the amount of the metal microparticles is more than 8:1, the metal microparticles often come into contact with each other, so that the dispersion effect is not obtained and the particles are short-circuited.

The compounding volume ratio of the organic charge trapping material and the organic insulating material is preferably 1:100 to 1:1. When the amount of the organic charge trapping material is less than 1:100, the dielectric constant is too small and the desired properties are not obtained in some cases. When the amount of the organic charge trapping material is more than 1:1, the organic charge trapping materials often come into contact with each other, so that the dispersion effect is not obtained and the materials are short-circuited.

In the embodiment of dispersing the metal microparticles, etc. in the organic insulating material, it is preferred that the metal microparticles, etc. are uniformly dispersed. This is because in a nonuniform dispersion, the concentration of the metal microparticles, etc. is locally increased, and it is likely that the desired dispersion effect is not obtained due to contact of the metal microparticles, etc. with each other.

It is preferred that the electrode layer 21 a, the dielectric material layer 30, and the electrode layer 21b are formed on the substrate 10 as thin films in this order.

The thin films of the electrode layers 21 a and 21 b are preferably formed by a known method such as vacuum deposition though the method of forming them is not particularly restricted.

The method for forming the dielectric material layer 30 is not particularly limited, and may be a method of applying at a time the organic insulating material 31 and the metal microparticles, etc. 32 mixed beforehand, a method of codepositing the organic insulating material 31 and the metal microparticles, etc. 32, a method of sandwiching a layer of the metal microparticles, etc. 32 between layers of the organic insulating material 31, in other words, thus forming the layer of the metal microparticles, etc. 32 in the organic insulating material 31 as an intermediate layer, etc.

The capacitor may have such a structure that the dielectric material layer 30 is further sandwiched between layers of the organic insulating material, in other words, the dielectric material layer 30 is formed as an intermediate layer in the organic insulating material.

In the method of applying the liquid mixture of the organic insulating material and the metal microparticles, etc., it is preferred that methylene chloride, tetrahydrofuran, acetonitrile, or ethyl alcohol, etc. is used as a solvent, and the metal microparticles, etc. and the organic insulating material are mixed at the above compounding volume ratio, diluted to a density of 0.3 to 3.0% by weight, and then applied. A surfactant, a resin binder, etc. may be added to the mixture if necessary. The application is preferably conducted by a spin coating method. The applied mixture is preferably dried at 70 to 110°C.

In the deposition step, the temperature of the substrate is appropriately selected depending on the electrode material, the organic insulating material, and the metal microparticles, used. The temperature is preferably 0 to 150°C in the formation of the electrode layers 21a and 21b, and is preferably 0 to 100°C in the formation of the dielectric material layer 30.

In the method of depositing the mixture layer of the organic insulating material and the metal microparticles, etc., the vacuum degree is preferably $3 \times 10^{-6}$ Torr, the speed for forming the film of the organic insulating material is preferably 0.5 to 2.0 Angstrom/s, and the speed for forming the film of the metal microparticles is preferably 0.1 to 1.0 Angstrom/s. The film forming speeds within these ranges are preferred from the viewpoints of controlling the deterioration

by the deposited material and controlling the crystal form of the deposited film.

The dielectric material layer 30 may be formed by a spin coating method, a vacuum deposition method, etc., which are common methods for forming organic thin films. In the case of particular metal microparticles of Au, Pt, Rh, Ag, etc., a diffusion method may be used such that after the organic insulating material film and the metal microparticles film are stacked, they are heat-treated to diffuse the metal in the organic film.

The thickness of each electrode layer 21 a, 21 b is preferably 50 to 200 nm, and that of the dielectric material layer 30 is preferably 20 to 200 nm.

The mechanism of the high dielectric constant of the capacitor of the invention produced by the above method is not elucidated in detail, and seems as follows. That is, once a charge is injected to the metal microparticles, etc. by tunnel injection, etc., the charge is trapped in the metal microparticles, etc. based on the energy level relation to the organic insulating material. The trapped charge acts in the same manner as dielectric polarization in the dielectric material, so that extremely large dielectric constant can be obtained practically even when the organic insulating material has a small dielectric constant.

Thus, even in the case of using the organic insulating material inherently having a smaller dielectric constant, the material can practically act to show a high dielectric constant, to provide the capacitor having a large capacity.

Examples

The capacitor of the present invention will be described in further detail below with reference to Examples without intention of restricting the invention.

[Example 1]

A capacitor having the structure shown in Fig. 1 was produced in the following manner.

A glass substrate was used as the substrate 10, and an aluminum thin film was formed as the electrode layer 21 a by a vacuum deposition method. Then, 2-amino-4,5-imidazole dicyanate (A1292 available from Tokyo Kasei Kogyo Co., Ltd.) as the organic insulating material 31 and aluminum as the metal microparticles 32 were codeposited to form the dielectric material layer 30, and aluminum was formed thereon into a thin film as the electrode layer 21 b, successively to produce a capacitor of Example 1.

The electrode layer 21 a, the dielectric material layer 30, and the electrode layer 21 b were formed such that the thicknesses thereof were 100 nm, 100 nm, and 100 nm, respectively. The average particle diameter of aluminum as the metal microparticles 32 was about 25 nm. The deposition was carried out by a diffusion pump exhaust deposition apparatus under a vacuum degree of $3 \times 10^{-6}$ torr. Aluminum was deposited by a resistance heating method at a film forming speed of 3 Angstrom/sec. The 2-amino-4,5-imidazole dicyanate containing aluminum as the metal microparticles was formed by a codeposition method. The codeposition was achieved by a resistance heating method, the 2-amino-4,5-imidazole dicyanate film forming speed was 2 Angstrom/sec, and the aluminum film forming speed was 1 Angstrom/sec. The layers were deposited successively in one deposition apparatus such that the sample did not come into contact with air in the deposition processes.

[Example 2]

2-Amino-4,5-imidazole dicyanate was used as the organic insulating material 31, gold was used as the metal microparticles 32, and they were codeposited to form a film as the dielectric material layer 30. A capacitor was produced under the same conditions as Example 1 except for using the film.

[Example 3]

2-Amino-4,5-imidazole dicyanate was used as the organic insulating material 31, copper was used as the metal microparticles 32, and they were codeposited to form a film as the dielectric material layer 30. A capacitor was produced under the same conditions as Example 1 except for using the film.

[Example 4]

2-Amino-4,5-imidazole dicyanate was used as the organic insulating material 31, and aluminum was used as the metal microparticles 32, to form the dielectric material layer 30. Further, layers containing only 2-amino-4,5-imidazole dicyanate were disposed between the dielectric material layer 30 and each of the electrodes 21a and 21b to form such a structure that the dielectric material layer 30 was disposed as an intermediate layer in the organic insulating material. The 2-amino-4,5-imidazole dicyanate layer having a thickness of 40 nm, the dielectric material layer 30 having a thickness

of 20 nm, and the 2-amino-4,5-imidazole dicyanate layer having a thickness of 40 nm were stacked in this order by a vacuum deposition method to form a three-layered film. A capacitor was produced under the same conditions as Example 1 except for using the film.

[Example 5]

The following quinomethane compound A was used as the organic insulating material 31 and aluminum was used as the metal microparticles 32 in the dielectric material layer 30, and a quinomethane compound layer having a thickness of 40 nm, the dielectric material layer having a thickness of 20 nm, and a quinomethane compound layer having a thickness of 40 nm were stacked in this order by a vacuum deposition method to form a three-layered film. A capacitor was produced under the same conditions as Example 1 except for using the film.

[Chemical Formula 5]

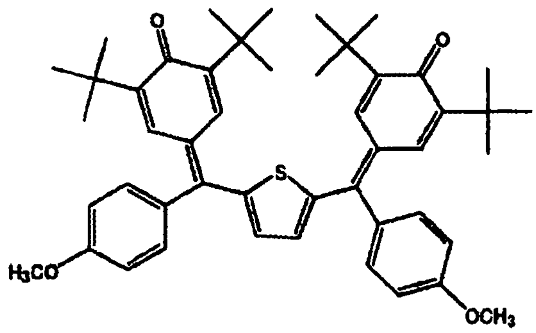

[Example 6]

The following quinomethane compound B was used as the organic insulating material 31 and aluminum was used as the metal microparticles 32 in the dielectric material layer 30, and a quinomethane compound layer having a thickness of 40 nm, the dielectric material layer having a thickness of 20 nm, and a quinomethane compound layer having a thickness of 40 nm were stacked in this order by a vacuum deposition method to form a three-layered film. A capacitor was produced under the same conditions as Example 1 except for using the film.

[Chemical Formula 6]

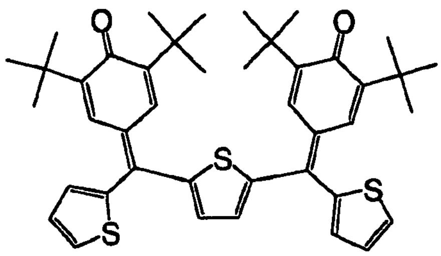

[Example 7]

The following triphenylamine compound C was used as the organic insulating material 31 and aluminum was used as the metal microparticles 32 in the dielectric material layer 30, and a triphenylamine compound layer having a thickness of 40 nm, the dielectric material layer having a thickness of 20 nm, and a triphenylamine compound layer having a thickness of 40 nm were stacked in this order by a vacuum deposition method to form a three-layered film. A capacitor was produced under the same conditions as Example 1 except for using the film.

[Chemical Formula 7]

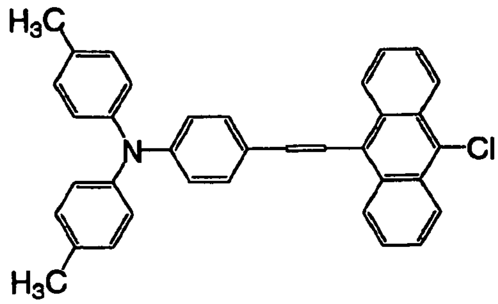

[Example 8]

The following triphenylamine compound D was used as the organic insulating material 31 and aluminum was used as the metal microparticles 32 in the dielectric material layer 30, and a triphenylamine compound layer having a thickness of 40 nm, the dielectric material layer having a thickness of 20 nm, and a triphenylamine compound layer having a thickness of 40 nm were stacked in this order by a vacuum deposition method to form a three-layered film. A capacitor was produced under the same conditions as Example 1 except for using the film.

[Chemical Formula 8]

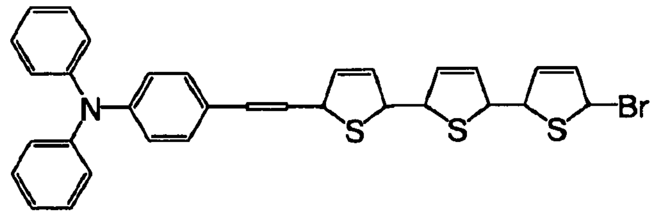

[Example 9]

The following pyridone compound E was used as the organic insulating material 31 and aluminum was used as the metal microparticles 32 in the dielectric material layer 30, and a pyridone compound layer having a thickness of 40 nm, the dielectric material layer having a thickness of 20 nm, and a pyridone compound layer having a thickness of 40 nm were stacked in this order by a vacuum deposition method to form a three-layered film. A capacitor was produced under the same conditions as Example 1 except for using the film.

[Chemical Formula 9]

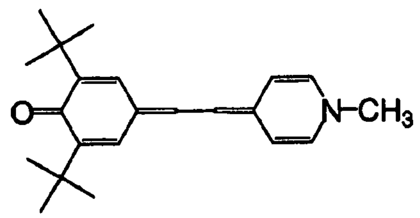

[Example 10]

Copper phthalocyanine was used as the organic charge trapping material 32 instead of the metal microparticles 32, the 2-amino-4,5-imidazole dicyanate film forming speed was 1 Angstrom/sec, and the copper phthalocyanine film forming speed was 0.5 Angstrom/sec. A capacitor was produced under the same conditions as Example 1 except therefor.

[Example 11]

2-Amino-4,5-imidazole dicyanate was used as the organic insulating material 31, and copper phthalocyanine was used as the organic charge trapping material 32, to form the dielectric material layer 30. Further, layers containing only 2-amino-4,5-imidazole dicyanate were disposed between the dielectric material layer 30 and each of the electrodes 21 a and 21 b to form such a structure that the dielectric material layer 30 was disposed as an intermediate layer in the organic insulating material. The 2-amino-4,5-imidazole dicyanate layer having a thickness of 30 nm, the dielectric material layer 30 having a thickness of 40 nm, and the 2-amino-4,5-imidazole dicyanate layer having a thickness of 30 nm were stacked in this order by a vacuum deposition method to form a three-layered film. A capacitor was produced under the same conditions as Example 10 except for using the film.

[Example 12]

2-Amino-4,5-imidazole dicyanate was used as the organic insulating material 31 and the above pyridone compound E was used as the organic charge trapping material 32 in the dielectric material layer 30, and a 2-amino-4,5-imidazole dicyanate layer having a thickness of 30 nm, the dielectric material layer 30 having a thickness of 40 nm, and a 2-amino-4,5-imidazole dicyanate layer having a thickness of 30 nm were stacked in this order by a vacuum deposition method to form a three-layered film. A capacitor was produced under the same conditions as Example 11 except for using the film.

[Example 13]

2-Amino-4,5-imidazole dicyanate was used as the organic insulating material 31 and α-6T was used as the organic charge trapping material 32 in the dielectric material layer 30, and a 2-amino-4,5-imidazole dicyanate layer having a thickness of 30 nm, the dielectric material layer 30 having a thickness of 40 nm, and a 2-amino-4,5-imidazole dicyanate layer having a thickness of 30 nm were stacked in this order by a vacuum deposition method to form a three-layered film. A capacitor was produced under the same conditions as Example 11 except for using the film.

[Example 14]

The following triphenylamine compound F was used as the organic insulating material 31 and copper phthalocyanine was used as the organic charge trapping material 32 in the dielectric material layer 30, and a triphenylamine compound layer having a thickness of 40 nm, the dielectric material layer having a thickness of 20 nm, and a triphenylamine compound layer having a thickness of 40 nm were stacked in this order by a vacuum deposition method to form a three-layered film. A capacitor was produced under the same conditions as Example 11 except for using the film.

**[Chemical Formula 10]**

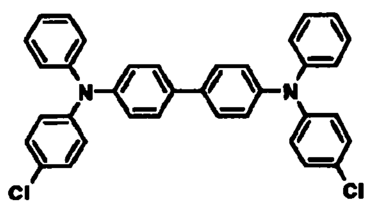

[Example 15]

The following triphenylamine compound G was used as the organic insulating material 31 and copper phthalocyanine was used as the organic charge trapping material 32 in the dielectric material layer 30, and a triphenylamine compound layer having a thickness of 40 nm, the dielectric material layer having a thickness of 20 nm, and a triphenylamine compound layer having a thickness of 40 nm were stacked in this order by a vacuum deposition method to form a three-layered film. A capacitor was produced under the same conditions as Example 11 except for using the film.

[Chemical Formula 11]

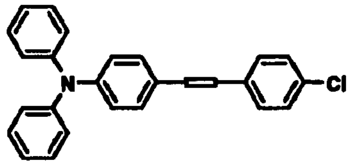

[Example 16]

α-NPD was used as the organic insulating material 31 and copper phthalocyanine was used as the organic charge trapping material 32 in the dielectric material layer 30, and an α-NPD layer having a thickness of 40 nm, the dielectric material layer having a thickness of 20 nm, and an α-NPD layer having a thickness of 40 nm were stacked in this order by a vacuum deposition method to form a three-layered film. A capacitor was produced under the same conditions as Example 11 except for using the film.

[Comparative Example 1]

A glass substrate was used as the substrate 10, and by a vacuum deposition method, aluminum was formed into the electrode layer 21 a, 2-amino-4,5-imidazole dicyanate was formed into the dielectric material layer, and aluminum was formed into a thin film for the electrode layer 21 b, successively, to produce a capacitor of Comparative Example 1. The production conditions were equal to those of Example 1 except for not codepositing aluminum with 2-amino-4,5-imidazole dicyanate.

[Comparative Example 2]

A capacitor of Comparative Example 2 was produced in the same manner as Comparative Example 1 except for using the quinomethane compound A of Example 5 in the dielectric material layer.

[Comparative Example 3]

A capacitor of Comparative Example 3 was produced in the same manner as Comparative Example 1 except for using the quinomethane compound B of Example 6 in the dielectric material layer.

[Comparative Example 4]

A capacitor of Comparative Example 4 was produced in the same manner as Comparative Example 1 except for using the triphenylamine compound C of Example 7 in the dielectric material layer.

[Comparative Example 5]

A capacitor of Comparative Example 5 was produced in the same manner as Comparative Example 1 except for using the triphenylamine compound D of Example 8 in the dielectric material layer.

[Comparative Example 6]

A capacitor of Comparative Example 6 was produced in the same manner as Comparative Example 1 except for using the pyridone compound E of Example 9 in the dielectric material layer.

[Comparative Example 7]

A glass substrate was used as the substrate 10, and by a vacuum deposition method, aluminum was formed into the electrode layer 21 a, 2-amino-4,5-imidazole dicyanate was formed into the dielectric material layer, and aluminum was formed into a thin film for the electrode layer 21b, successively, to produce a capacitor of Comparative Example 7. The production conditions were equal to those of Example 10 except for not codepositing copper phthalocyanine with

2-amino-4,5-imidazole dicyanate.

[Comparative Example 8]

A capacitor of Comparative Example 8 was produced in the same manner as Comparative Example 7 except for using the triphenylamine compound F of Example 14 in the dielectric material layer.

[Comparative Example 9]

A capacitor of Comparative Example 9 was produced in the same manner as Comparative Example 7 except for using the triphenylamine compound G of Example 15 in the dielectric material layer.

[Comparative Example 10]

A capacitor of Comparative Example 10 was produced in the same manner as Comparative Example 7 except for using α-NPD of Example 16 in the dielectric material layer.

[Evaluation method]

The relative dielectric constants of the capacitors of Examples 1 to 16 and Comparative Examples 1 to 10 were measured at the room temperature. The relative dielectric constants were measured by an impedance analyzer YHP4192A. The measured relative dielectric constants at 1 kHz are shown in Table 2. Further, a scanning electron microscope (SEM) photograph of the surface of the dielectric material layer of Example 1 is shown in Fig. 2.

[Table 2]

| | Structure of dielectric material layer | | | Evaluation |
|---|---|---|---|---|
| | Functional organic material | Metal microparticles or organic charge trapping material | Film | Relative di-electric constant |
| Example 1 | 2-Amino-4,5-imidazole dicyanate | Aluminum | Codeposited film | 156 |
| Example 2 | 2-Amino-4,5-imidazole dicyanate | Gold | Codeposited film | 244 |
| Example 3 | 2-Amino-4,5-imidazole dicyanate | Copper | Codeposited film | 75 |
| Example 4 | 2-Amino-4,5-imidazole dicyanate | Aluminum | Three-layered film | 96 |
| Example 5 | Quinomethane compound | Aluminum | Three-layered film | 11.5 |
| Example 6 | Quinomethane compound | Aluminum | Three-layered film | 37.3 |
| Example 7 | Triphenylamine compound | Aluminum | Three-layered film | 17.3 |
| Example 8 | Triphenylamine compound | Aluminum | Three-layered film | 21.8 |
| Example 9 | Pyridone compound | Aluminum | Three-layered film | 32 |
| Example 10 | 2-Amino-4,5-imidazole dicyanate | Copper phthalocyanine | Codeposited film | 57 |
| Example 11 | 2-Amino-4,5-imidazole dicyanate | Copper phthalocyanine | Three-layered film | 42 |

Table continued

| | Structure of dielectric material layer | | | Evaluation |
|---|---|---|---|---|
| | Functional organic material | Metal microparticles or organic charge trapping material | Film | Relative di-electric constant |
| Example 12 | 2-Amino-4,5-imidazole dicyanate | Pyridone compound | Three-layered film | 29 |
| Example 13 | 2-Amino-4,5-imidazole dicyanate | α-6T | Three-layered film | 35 |
| Example 14 | Triphenylamine compound | Copper phthalocyanine | Three-layered film | 17 |
| Example 15 | Triphenylamine compound | Copper phthalocyanine | Three-layered film | 26 |
| Example 16 | α-NPD | Copper phthalocyanine | Three-layered film | 65 |
| Comp. Ex. 1 | 2-Amino-4,5-imidazole dicyanate | None | Deposited film | 3.6 |
| Comp. Ex. 2 | Quinomethane compound | None | Deposited film | 2.1 |
| Comp. Ex. 3 | Quinomethane compound | None | Deposited film | 2.5 |
| Comp. Ex. 4 | Triphenylamine compound | None | Deposited film | 2.7 |
| Comp. Ex. 5 | Triphenylamine compound | None | Deposited film | 3.2 |
| Comp. Ex. 6 | Pyridone compound | None | Deposited film | 3.0 |
| Comp. Ex. 7 | 2-Amino-4,5-imidazole dicyanate | None | Deposited film | 3 |
| Comp. Ex. 8 | Triphenylamine compound | None | Deposited film | 3 |
| Comp. Ex. 9 | Triphenylamine compound | None | Deposited film | 4 |
| Comp. Ex. 10 | α-NPD | None | Deposited film | 3 |

As shown in Table 2, while the relative dielectric constant of 2-amino-4,5-imidazole dicyanate used as the organic insulating material 31 was measured in Comparative Example 1, the relative dielectric constants of Examples 1 to 4 were 20 to 70 times as large as that of Comparative Example 1 despite the use of the same organic insulating material. Further, the quinomethane organic materials, triphenylamine compounds, and the pyridone compound were used as the organic insulating material 31 in Examples 5 to 9 to show the large dielectric constants, which were 5 to 20 times as large as those of Comparative Examples 2 to 6.

Similarly, as shown in Table 2, while the relative dielectric constant of 2-amino-4,5-imidazole dicyanate used as the organic insulating material 31 was measured in Comparative Example 7, the relative dielectric constants of Examples 10 to 13 were 10 to 20 times as large as that of Comparative Example 7 despite the use of the same organic insulating material. Further, the triphenylamine compounds and α-NPD were used as the organic insulating material 31 in Examples 14 to 16 to show the large dielectric constants, which were 5 to 20 times as large as those of Comparative Examples 8 and 9.

## Industrial Applicability

According to the present invention, there is provided the capacitor capable of showing a large relative dielectric constant and large capacity even in the case of using an organic insulating material with a low relative dielectric constant.

Further, the capacitor is flexible and can be produced at low temperature near room temperature, and thereby can be suitably used in various places such as printed boards and integrated circuits.

## Claims

1. A dielectric material comprising an organic insulating material, and metal microparticles and/or an organic charge trapping material in the organic insulating material, wherein the metal microparticles have a work function at an energy level between the ionization potential and the electron affinity of the organic insulating material, or alternatively the metal microparticles or the organic charge trapping material has an ionization potential and an electron affinity at an energy level between the ionization potential and the electron affinity of the organic insulating material.

2. The dielectric material according to claim 1, wherein the metal microparticles and/or the organic charge trapping material is dispersed in the organic insulating material, or alternatively a layer of the metal microparticles and/or the organic charge trapping material is sandwiched between layers of the organic insulating material.

3. The dielectric material according to claim 1 or 2, wherein the organic insulating material is selected from the group consisting of 2-amino-4,5-imidazole dicyanate, quinomethane compounds, triphenylamine compounds, pyridone compounds, polystyrenes, polyvinyl carbazoles, α-NPD, TPD, Alq3, and CBP.

4. The dielectric material according to any one of claims 1 to 3, wherein the organic insulating material is selected from the group consisting of 2-amino-4,5-imidazole dicyanate, triphenylamine compounds, and α-NPD, and the organic charge trapping material is selected from the group consisting of pyridone compounds, phthalocyanine compounds, and α-6T.

5. A capacitor comprising a layer of the dielectric material according to any one of claims 1 to 4 and two electrodes sandwiching the layer.

6. A capacitor comprising the dielectric material according to any one of claims 1 to 4, layers of an organic insulating material sandwiching the dielectric material, and electrodes sandwiching the layers.

7. A method for producing a capacitor, comprising the steps of forming an electrode thin film, applying a liquid mixture containing an organic insulating material, and metal microparticles and/or an organic charge trapping material to the formed electrode thin film, followed by drying, and forming an electrode thin film on the dried coated film.

8. A method for producing a capacitor, comprising the steps of forming an electrode thin film, codepositing an organic insulating material, and metal microparticles and/or an organic charge trapping material on the formed electrode thin film, and forming an electrode thin film on the codeposited film.

FIG. 1

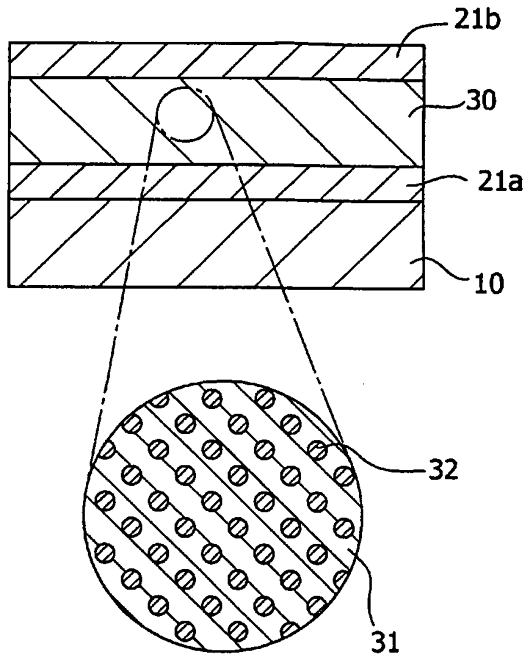


FIG. 2

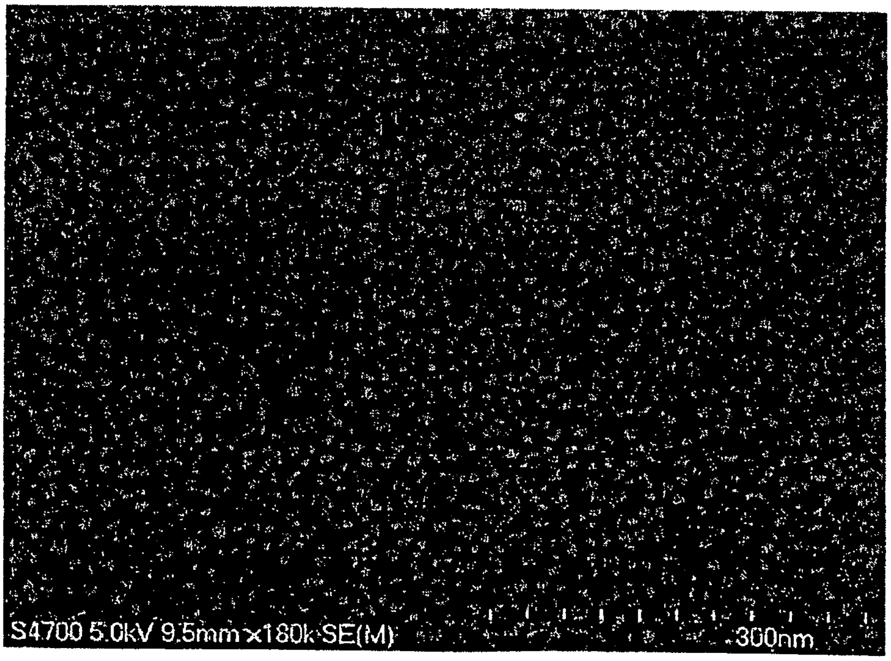

## INTERNATIONAL SEARCH REPORT

International application No.
PCT/JP2004/009139

A. CLASSIFICATION OF SUBJECT MATTER
Int.Cl[7] H01B3/00, H01B3/30, H01B17/64, H01G4/18, H01G4/20, H01G13/00

According to International Patent Classification (IPC) or to both national classification and IPC

B. FIELDS SEARCHED

Minimum documentation searched (classification system followed by classification symbols)
Int.Cl[7] H01B3/00, H01B3/30, H01B17/64, H01G4/18, H01G4/20, H01G13/00

Documentation searched other than minimum documentation to the extent that such documents are included in the fields searched
Jitsuyo Shinan Koho 1922-1996 Toroku Jitsuyo Shinan Koho 1994-2004
Kokai Jitsuyo Shinan Koho 1971-2004 Jitsuyo Shinan Toroku Koho 1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 7-106181 A (Towa Electron Kabushiki Kaisha),<br>21 April, 1995 (21.04.95),<br>Full text<br>(Family: none) | 7,8<br>1-6 |
| Y | JP 7-226334 A (Matsushita Electric Industrial Co., Ltd.),<br>22 August, 1995 (22.08.95),<br>Par. Nos. [0007] to [0026]; Figs. 1 to 11<br>(Family: none) | 7 |
| Y | JP 5-267091 A (Matsushita Electric Industrial Co., Ltd.),<br>15 October, 1993 (15.10.93),<br>Par. Nos. [0018] to [0019]; Fig. 1<br>(Family: none) | 8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 October, 2004 (04.10.04) | 26 October, 2004 (26.10.04) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2004/009139

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 90477/1985(Laid-open No. 206229/1986) (Fujikura Densen Kabushiki Kaisha), 26 December, 1986 (26.12.86), (Family: none) | 1-8 |
| A | JP 50-161543 A (Matsushita Electric Industrial Co., Ltd.), 27 December, 1975 (27.12.75), & DE 2444885 A1 & FR 2244792 A1 & GB 1487344 A | 1-8 |
| A | JP 54-12500 A (Matsushita Electric Industrial Co., Ltd.), 30 January, 1979 (30.01.79), (Family: none) | 1-8 |
| A | JP 54-163399 A (Matsushita Electric Industrial Co., Ltd.), 25 December, 1979 (25.12.79), (Family: none) | 1-8 |
| A | JP 54-163400 A (Matsushita Electric Industrial Co., Ltd.), 25 December, 1979 (25.12.79), (Family: none) | 1-8 |
| A | JP 55-6755 A (Matsushita Electric Industrial Co., Ltd.), 18 January, 1980 (18.01.80), (Family: none) | 1-8 |
| A | JP 58-69252 A (Kureha Chemical Industry Co., Ltd.), 25 April, 1983 (25.04.83), & FR 2514937 A1 & DE 3239017 A1 & GB 2110983 A | 1-8 |

Form PCT/ISA/210 (continuation of second sheet) (January 2004)